# EUROPEAN PATENT SPECIFICATION

(11) **EP 4 190 534 B1**
(45) Date of publication and mention of the grant of the patent: **12.06.2024**
(21) Application number: 23153031.2
(22) Date of filing: 08.05.2018
(51) Int. Cl.: B29C 64/106, B33Y 70/00, E06B 1/02

(54) **PROCESS FOR THREE-DIMENSIONAL PRINTING, FOR THE PRODUCTION OF WINDOWS**
VERFAHREN ZUM DREIDIMENSIONALEN DRUCKEN, ZUR HERSTELLUNG VON FENSTERN
PROCÉDÉ D'IMPRESSION EN TROIS DIMENSIONS, POUR LA FABRICATION DE FENÊTRES

(30) Priority: 09.05.2017 IT 201700050248
(43) Date of publication of application: 07.06.2023
(62) Divisional of application: 18728962.4
(73) Proprietor: Graf Synergy S.r.l., 41015 Nonantola (MO) (IT)
(72) Inventor: Vaccari, Andrea, 41015 Nonantola (MO) (IT)
(74) Representative: Luppi, Emanuele

(56) References cited:
- WO-A1-2017/027351
- WO-A1-2017/195110
- US-A- 3 382 089
- US-A1- 2003 032 214

## Description

### Technical Field

The present invention relates to a process for three-dimensional printing, for the production of windows.

### Background Art

In recent years, technologies for the three-dimensional printing of objects of various shapes and uses have become more widespread.

These are extremely innovative technologies, still in the process of being perfected, which make it possible to create, through additive production processes, objects with geometries difficult to implement using traditional manufacturing processes.

Some examples of industrial 3D printing processes include selective laser sintering, stereolithography and polyjet printing with photopolymer.

Selective laser sintering uses a laser to sinter thermoplastic, metallic or siliceous powders.

This type of process, in fact, involves the use of an apparatus which, by means of special distribution systems, spreads the layers of powders on a work surface which gradually drops, maintaining a constant distance from the laser emission source, included in the apparatus itself.

Such a technology allows the machining of different types of materials, but has the drawback that the surface finishing of the obtained objects is irregular and requires further processing steps in order to make it homogeneous.

The stereolithography process, on the other hand, is based on the polymerization of a liquid resin, deposited by means of appropriate nozzles, by means of a laser focused on the work surface by means of optical systems.

Furthermore, the polyjet printing process with photopolymer involves the use of apparatuses similar to conventional inkjet printers provided with nozzles that deposit acrylic or elastomer-based photopolymers on very thin layers.

The apparatus also has a UV-light emission element, which determines the polymerization of the photopolymers.

The objects obtained using these technologies are not particularly pleasant from the aesthetic point of view, so they need one or more steps of decoration of the outer surface in order to obtain, e.g., a material effect, particularly suitable for the decoration of window or door frames, floor elements, etc.

The decoration to obtain the material effect can be made using various techniques, such as the sublimation of the pigment, which consists in printing the design simulating the wooden grains on a flat surface on a special medium and then transferring it hot onto the surface to be decorated suitably pre-treated in such a way as to be perfectly receptive.

This is a decalcomania in which the transfer of the decoration takes place at high temperatures and with appropriate vacuums, whereby the solid pigment is directly transformed into steam and simultaneously penetrates into the pre-treated surface of the object.

An alternative method commonly used to obtain the material effect is the powder on powder deposition, by which polyester powders of different colors in solid form are incorporated directly into the pre-treatment layer of the object. These processes for three-dimensional printing do however have a number of drawbacks.

In fact, known three-dimensional printing processes generally require very complex apparatuses, which contributes to the increase in production costs. Furthermore, the known processes allow using only certain types of polymeric materials, in particular materials which are generally not very resistant and which give rise to fragile objects with little resistance to wear.

Consequently, the impossibility of using high-strength polymeric materials is a particular limitation.

Furthermore, in some cases, objects produced using known three-dimensional printing processes, in particular selective laser sintering, have irregular and grainy surface finishes, so that further processing steps are required, with a further increase in production costs.

Moreover, the decoration techniques traditionally used are very complex and expensive and do not permit obtaining a credible material effect.

Another process for three-dimensional printing of the known type is also disclosed in document US2003/032214A1.

### Description of the Invention

The main aim of the present invention is to provide a process for three-dimensional printing, for the production of windows, which allows to make elements having various geometries using high-strength polymeric materials.

One object of the present invention is to provide a process for three-dimensional printing which allows the use of resistant polymeric materials and with high mechanical properties.

Yet another object of the present invention is to provide manufactured articles by means of three-dimensional printing using simple apparatuses with a reduced number of processing steps.

Another object of the present invention is to provide a process for three-dimensional printing, particularly for the production of windows, plate-shaped elements for floors or the like, which allows to reduce production costs. Another object of the present invention is to provide a process for three-dimensional printing, for the production of windows, which allows the reproduction of a credible material effect and at affordable costs.

Another object of the present invention is to provide a process for three-dimensional printing, for the production of windows, which allows overcoming the aforementioned drawbacks of the prior art within the scope of a simple, rational, easy, efficient to use and cost-effective solution.

The above mentioned objects are achieved by the present process for three-dimensional printing according to claim 1.

### Brief Description of the Invention

Other characteristics and advantages of the present invention will become more evident from the description of a preferred, but not exclusive embodiment of a process for three-dimensional printing, for the production of windows, illustrated by way of an indicative, but non-limiting example, in the attached drawings in which:

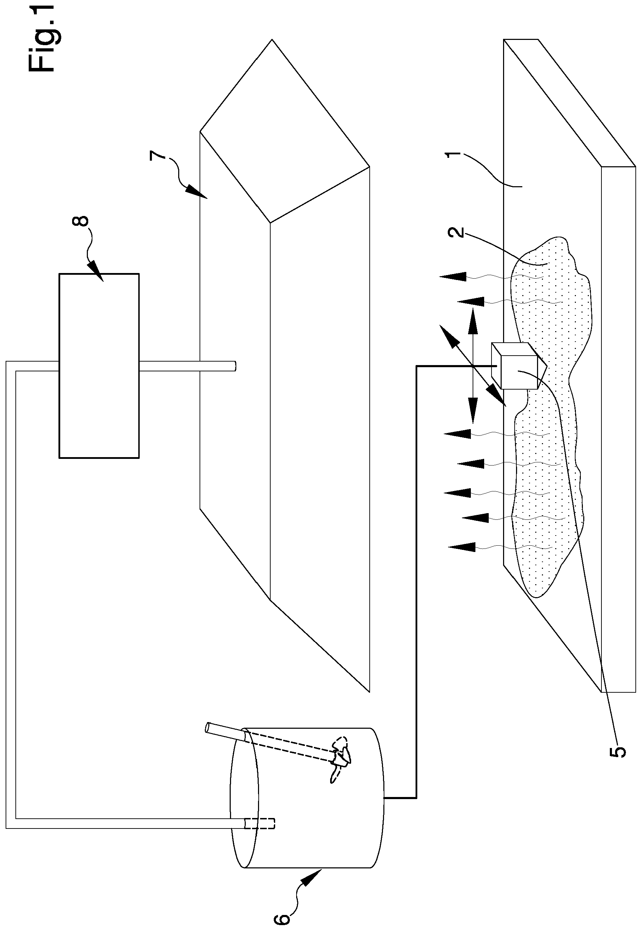

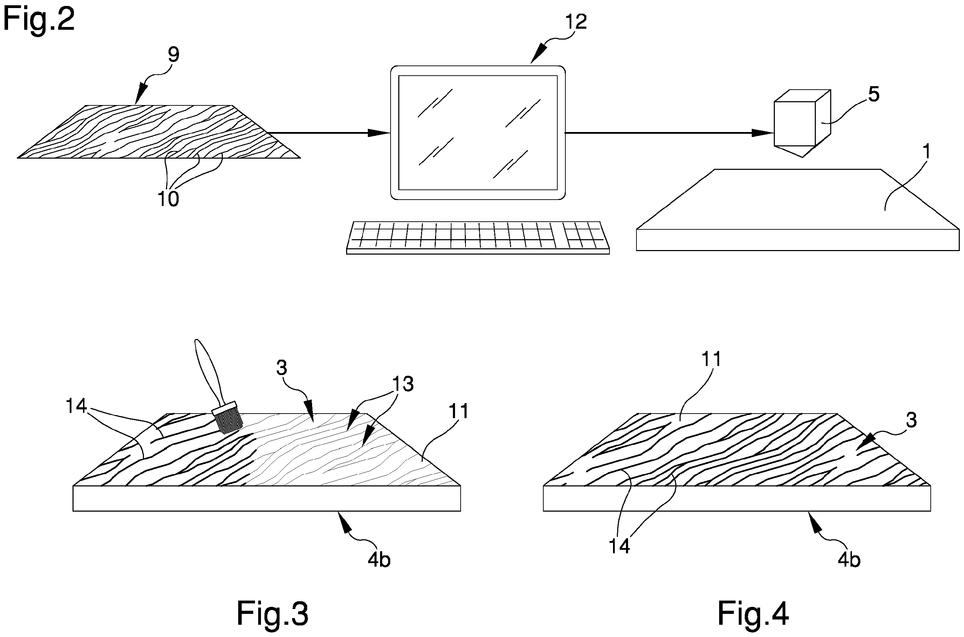

Figures 1 to 3 schematically show the phases of the three-dimensional printing process according to the invention;
Figure 4 is an axonometric view of the manufactured article obtained by means of the process according to the invention;

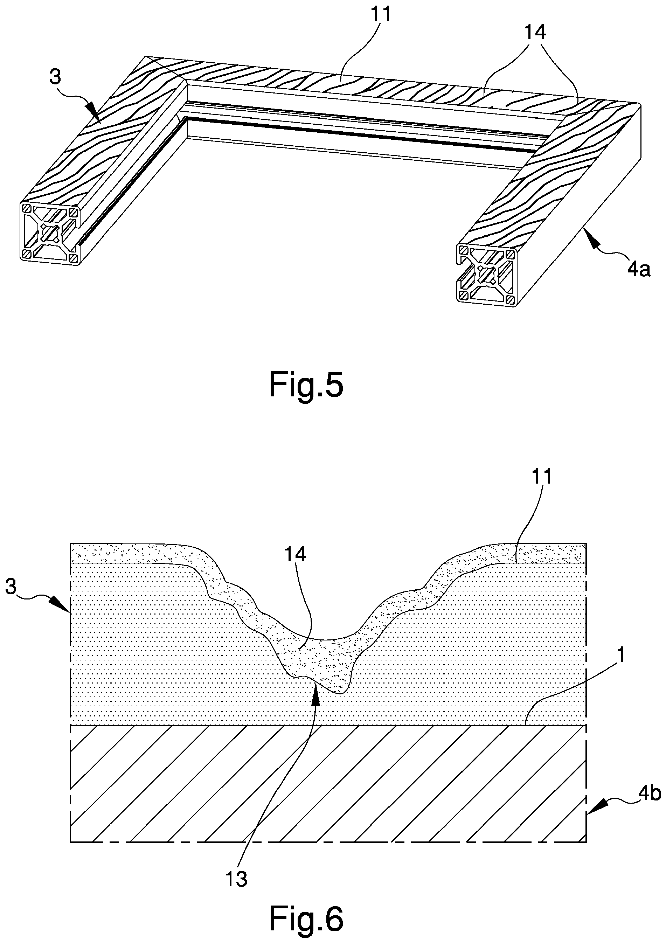

Figure 5 is an axonometric view of an alternative embodiment of the manufactured article obtained by means of the process according to the invention.
Figure 6 is a sectional view of a detail of the manufactured article of Figure 4 obtained by means of the process according to the invention.

### Embodiments of the Invention

The process for three-dimensional printing, for the production of windows, comprises:
- at least one supply step of PVC and of at least one solvent in which the PVC is soluble;
- at least one mixing step of PVC and of the solvent to obtain at least one mixture in the liquid phase;
- at least one distribution step of the mixture onto at least one deposition surface 1;
- at least one evaporation step of the solvent for obtaining at least one layer of PVC 2 of at least one manufactured article 3, which is subsequent to the distribution step.

According to the invention, the process also comprises repeating the distribution step and the evaporation step to obtain a plurality of overlapping layers of PVC 2 forming the manufactured article 3.

According to the invention, the manufactured article 3 obtained by means of the process is a decorative surface portion of a profiled element 4a for window frames provided with a deposition surface 1 and preferably made of PVC.

In other words, the process is particularly suitable for the decoration and surface finishing of traditional PVC profiles, although the possibility of applying the process for the production of the entire profiled element 4a or of the entire plate-shaped element 4b cannot be ruled out.

PVC, or polyvinyl chloride, is a thermoplastic polymer with high strength and high elasticity, as well as resistant to contact with acids, alkaline and saline solutions, both diluted and concentrated, light, robust, insulating and with low gas permeability.

It is, therefore, a material with remarkable characteristics, which can be used for countless uses, but which can hardly be used in traditional three-dimensional printing techniques.

During the production of PVC according to its intended use and the characteristics required of the material, additives are added to PVC, so by varying the type and dose of these additives, it is possible to obtain a material with totally different characteristics.

In particular, typical additives that are added to PVC during manufacture are stabilizers to protect it from thermal degradation and improve its resistance to light and atmospheric agents, plasticizers to give the product flexibility and elasticity, lubricants to facilitate processing, pigments for coloring, etc. Usefully, the solvent used for the production of the mixture is at least one of a ketone and an ether.

In fact, although PVC is a rather inert material, it is soluble in some organic solvents, including ketones and ethers, which have on the one hand a physical action of softening polymer pellets and on the other a chemical action on the bonds of Van der Walls existing between macromolecules, bringing them into solution.

Preferably, the solvent is at least one of a cyclic ketone and a cyclic ether, in particular cyclohexanone and tetrahydrofuran, which can be used individually or in mixture with each other and which are solvents particularly suitable for dissolving PVC, although the possibility of using different types of solvent cannot be ruled out.

The solvent contained in the mixture distributed on the deposition surface 1 causes the PVC from which the profiled element 4a and/or the plate-shaped element 4b is made to undergo a surface softening.

Such softening action permits improving the adhesion of the layers of PVC 2 to the deposition surface 1, making it receptive, so that the manufactured article 3 is a single block with the element on which it is distributed.

The mixture obtained in the mixing step of the PVC and of at least one of the solvents is a liquid mixture, which can therefore be distributed on the deposition surface 1 in a simple way.

The evaporation step of the solvent substantially takes place immediately after the distribution step of the mixture.

Furthermore, the evaporation step of the solvent can be natural or forced.

In particular, in the case of forced solvent evaporation, it is possible to provide an evaporation device associated with the distribution assembly 5, such as e.g. a hot air blower, an infrared lamp or another heating element, which allows the solvent evaporation step to be accelerated so as to immediately follow the deposition step.

In fact, as soon as the mixture is distributed on the deposition surface 1, the solvent immediately tends to evaporate because of its high volatility, allowing the layer of PVC 2 to be obtained without the need for further solidification steps of the distributed material.

Advantageously, the process comprises at least one supply step of at least one distribution assembly 5 comprising:
- at least one distribution head of the mixture onto the deposition surface 1; and
- at least one removal and recovery system 7, 8 of the evaporated solvent.

Furthermore, the distribution assembly 5 comprises at least one mixing unit 6 of PVC in the form of pellets and of the solvent to obtain the mixture.

Furthermore, the possibility cannot be ruled out of adding to the mixture at least a reinforcing material, which is added to the PVC and to the solvent during the mixing phase in order to make the layer of PVC 2 more resistant and increase its mechanical properties.

Alternatively, an auxiliary head may be provided to allow the deposition of the reinforcing material only.

Preferably, the reinforcing material is in the form of fiber, although the possibility of using materials in a different form cannot be ruled out.

An example of a material in fiber form to be used is glass fibers, although different types of fibers can be used.

Such solution could be particularly convenient in the case where the profiled element 4a or the plate-shaped element 4b is made entirely by means of the distribution of the mixture containing PVC.

In the case of the profiled element 4a, it is also possible to achieve an internal geometry different from those commonly provided, e.g., a honeycomb geometry which, together with the presence of reinforcing material, makes it possible to increase the mechanical properties of the profiled element 4a, in particular its mechanical strength.

Preferably, the distribution head is movable along a plurality of directions on a two-dimensional Cartesian plane substantially parallel to the deposition surface 1 for the distribution of the mixture to obtain a plurality of layers of PVC 2 depending on the final conformation desired.

Since this mixture is distributed on the deposition surface 1 by means of the distribution head, its viscosity must be equal to a value established in order to allow simple and easy distribution, even if a different shape of head is used.

In particular, the mixture comprises the solvent in a percentage by weight with respect to the PVC so that the viscosity is equal to the fixed value.

Furthermore, as seen above, PVC may have different characteristics as the additives contained in it vary and, therefore, the percentage by weight of the solvent may vary from time to time together with any variation in the polymer load, so that the viscosity of the obtained mixture is always equal to the established value.

The possibility cannot be ruled out of providing the distribution assembly 5 with a system for dosing the solvent from time to time along with the variation in type of PVC used and in the additives contained in it.

The solvent used to produce the mixture is toxic and highly flammable.

In particular, tetrahydrofuran forms highly explosive mixtures with air, is highly toxic in the event of oral contact and highly irritating in case of dermal and respiratory contact.

As regards cyclohexanone, this is a substance which also forms explosive mixtures with air, is corrosive and highly toxic, causing convulsions, hypothermia and bradycardia.

In both cases, these substances are also highly harmful to the environment.

For these reasons, the distribution assembly 5 is housed in a booth in controlled atmosphere, which prevents the dispersion of toxic vapors of the evaporated solvent during the processing phases and in such a way as to protect the operators from any intoxication.

The evaporated solvent is therefore recovered through the removal and recovery system 7, 8, which, by means of an extraction hood 7, extracts the air in the booth and, through a recovery unit 8, collects the evaporated solvent, sending it back to the mixing unit 6 in order to avoid the continuous supply of new solvent and optimize production costs.

Advantageously, the process comprises at least one definition step of the superficial shape of the manufactured article 3 comprising:
- at least one supply step of at least one image 9 in digital format reproducing at least one wooden surface portion provided with a plurality of grains 10, comprising a plurality of pixels;
- at least one identification step of at least one color range datum of each of the pixels by means of at least one software; and
- at least one transformation step of the color range datum into at least one depth spatial datum to produce at least one three-dimensional digital model of the manufactured article 3 with material effect provided with at least one outer surface 11 reproducing the grains 10 by means of a plurality of grooves 13 having variable depth.

Within the scope of this treatise, "color range" means the color intensity of each pixel in image 9, with reference to every possible color, including black and white.

As a result, the software used allows identifying the color range datum for any image 9 in digital format whether it is in color, black and white or gray.

In particular, the depth of the groove 13 present on the outer surface 11 is substantially proportionate to the color range of the grains 10.

The software used by means of a processing unit 12, therefore, allows the production of a three-dimensional digital model provided with grooves 13 having a depth which increases along with the intensity of the color range of the pixels relating to the single grain 10.

This way the surface finishing of the manufactured article 3 is such as to reproduce the material effect from both the tactile and visual point of view. The distribution step allows producing the three-dimensional digital model to obtain the manufactured article 3 with material effect by means of the distribution assembly 5.

Usefully, the process comprises at least one painting step of the outer surface 11 by means of at least one paint 14, subsequent to the definition step of the surface shape of the manufactured article 3.

In particular, the paint 14 used can be in liquid and/or powder form.

Such paint 14 tends to accumulate inside the grooves 13 reproducing the color range of the grains 10.

This way, the surface shape of the manufactured article 3 can be defined, recreating a material effect which is credible not only from the point of view of surface finishing, but also from the chromatic point of view, inasmuch as the paint 14 that accumulates in the grooves 13 allows recreating the chiaroscuro typical of grains 10 of wood.

In has in practice been ascertained that the described invention achieves the intended objects.

In this regard, the fact is underlined that the particular solution of providing a process for three-dimensional printing, particularly for the production of windows, plate-shaped elements for floors or the like, permits creating manufactured articles having various geometries using a high-strength polymeric material, such as PVC.

Again, this process also makes it possible to produce a manufactured article using three-dimensional printing and using simple apparatuses with a reduced number of processing steps, with a significant reduction in production costs and processing times.

Furthermore, the particular solution of providing the mixing of PVC and a solvent to obtain a liquid mixture permits making the PVC manufactured article with material effect while avoiding various solidification steps.

Moreover, the particular solution of providing a definition step of the surface shape of the manufactured article and a subsequent painting step allows the material effect to be obtained in a credible way without the use of complex decorative techniques.

## Claims

1. Process for three-dimensional printing, for the production of windows, which comprises:
- at least one supply step of PVC and of at least one solvent in which said PVC is soluble;
- at least one mixing step of said PVC and of said solvent to obtain at least one mixture in the liquid phase;
- at least one distribution step of said mixture onto at least one deposition surface (1);
- at least one evaporation step of said solvent for obtaining at least one layer of PVC (2) of at least one manufactured article (3), said evaporation step being subsequent to said distribution step; and
- repeating said distribution step and said evaporation step to obtain a plurality of said overlapping layers of PVC (2) forming said manufactured article (3);
wherein said manufactured article (3) is a decorative surface portion of a profiled element (4a) for window frames.

2. Process according to claim 1, wherein said solvent is at least one of a ketone and an ether.

3. Process according to one or more of the preceding claims, wherein said solvent is at least one of a cyclic ketone and a cyclic ether.

4. Process according to one or more of the preceding claims, wherein
said solvent is at least one of cyclohexanone and tetrahydrofuran,

5. Process according to one or more of the preceding claims, wherein
said mixture comprises said solvent in a percentage by weight with respect to said PVC so that the viscosity of said mixture is equal to a fixed value.

6. Process according to one or more of the preceding claims, which comprises at least one supply step of at least one distribution assembly (5) comprising:
- at least one distribution head of said mixture onto said deposition surface (1); and
- at least one removal and recovery system (7, 8) of said evaporated solvent.

7. Process according to one or more of the preceding claims, wherein said distribution assembly (5) comprises at least one mixing unit (6) of said PVC and of said solvent.

8. Process according to one or more of the preceding claims, which comprises at least one definition step of the superficial shape of said manufactured article (3) comprising:
- at least one supply step of at least one image (9) in digital format reproducing at least one wooden surface portion provided with a plurality of grains (10), comprising a plurality of pixels;
- at least one identification step of at least one color range datum of each of said pixels by means of at least one software; and
- at least one transformation step of said color range datum into at least one depth spatial datum to produce at least one three-dimensional digital model of said manufactured article (3) with material effect provided with at least one outer surface (11) reproducing said grains (10) by means of a plurality of grooves (13) having variable depth;
said distribution step taking place in such a way as to produce a three-dimensional printing of said model to obtain said manufactured article (3) with material effect by means of said distribution assembly (5).

9. Process according to one or more of the preceding claims, which comprises at least one painting step of said outer surface (11) by means of at least one paint (14), said paint (14) accumulating in said grooves (13) and reproducing said color range of said grains (10).

10. Process according to one or more of the preceding claims, wherein the depth of said grooves (13) is substantially proportional to said color range of said grains (10).

## Patentansprüche

1. Verfahren zum dreidimensionalen Drucken für die Herstellung von Fenstern, umfassend:
- mindestens einen Zuführungsschritt von PVC und mindestens eines Lösungsmittels, in dem das PVC löslich ist;
- mindestens einen Mischvorgang des PVC und des Lösungsmittels, um mindestens eine Mischung in der flüssigen Phase zu erhalten;
- mindestens einen Schritt des Verteilens dieser Mischung auf mindestens eine Ablagerungsfläche (1);
- mindestens einen Verdampfungsschritt des Lösungsmittels, um mindestens eine PVC-Schicht (2) mindestens eines hergestellten Artikels (3) zu erhalten, wobei der Verdampfungsschritt auf den Verteilungsschritt folgt; und
- Wiederholen des Verteilungsschritts und des Verdampfungsschritts, um eine Vielzahl der überlappenden Schichten aus PVC (2) zu erhalten, die den hergestellten Artikel (3) bilden;
wobei der hergestellte Artikel (3) ein dekorativer Oberflächenabschnitt eines profilierten Elements (4a) für Fensterrahmen ist.

2. Verfahren nach Anspruch 1, wobei das Lösungsmittel ein Keton und/ oder ein Ether ist.

3. Verfahren nach einem oder mehreren der vorhergehenden Ansprüche, wobei das Lösungsmittel ein cyclisches Keton und/oder ein cyclischer Ether ist.

4. Verfahren nach einem oder mehreren der vorhergehenden Ansprüche, wobei das Lösungsmittel Cyclohexanon und/oder Tetrahydrofuran ist.

5. Verfahren nach einem oder mehreren der vorhergehenden Ansprüche, wobei die Mischung das Lösungsmittel in einem solchen prozentualen Gewichtsanteil in Bezug auf das PVC enthält, dass die Viskosität der Mischung gleich einem festen Wert ist.

6. Verfahren nach einem oder mehreren der vorhergehenden Ansprüche, umfassend mindestens einen Zuführungsschritt von mindestens einer Verteilereinheit (5), umfassend:
- mindestens einen Verteilerkopf für die Mischung auf die Ablagerungsfläche (1); und
- mindestens ein System zur Entfernung und Rückgewinnung (7, 8) des verdampften Lösungsmittels.

7. Verfahren nach einem oder mehreren der vorhergehenden Ansprüche, wobei die Verteilungseinheit (5) mindestens eine Mischeinheit (6) des PVCs und des Lösungsmittels umfasst.

8. Verfahren nach einem oder mehreren der vorhergehenden Ansprüche, **dadurch gekennzeichnet, dass** es mindestens einen Arbeitsschritt zur Definition der Oberflächengestaltung des hergestellten Gegenstandes (3) umfasst, der Folgendes umfasst:
- mindestens einen Schritt der Bereitstellung mindestens eines Abbildes (9) in digitaler Form, das mindestens einen hölzernen Oberflächenabschnitt wiedergibt, der mit einer Vielzahl von Maserungen (10) versehen ist und eine Vielzahl von Pixeln aufweist;
- mindestens einen Schritt der Identifikation mindestens eines Farbbereichswerts jedes der genannten Pixel mit Hilfe mindestens einer Software; und
- mindestens einen Umwandlungsschritt des Farbbereichswerts in mindestens einen Tiefenwert, um mindestens ein dreidimensionales digitales Modell des hergestellten Artikels (3) mit Materialeffekt zu erzeugen, das mit mindestens einer äußeren Oberfläche (11) versehen ist, die die Maserungen (10) mittels einer Vielzahl von Vertiefungen (13) mit variabler Tiefe wiedergibt;
wobei der Verteilungsschritt so erfolgt, dass ein dreidimensionaler Druck des Modells erzeugt wird, um den hergestellten Artikel (3) mit Materialeffekt mittels der Verteilungseinheit (5) zu erhalten.

9. Verfahren nach einem oder mehreren der vorhergehenden Ansprüche, umfassend mindestens einen Lackierschritt der Außenfläche (11) mit mindestens einer Farbe (14), wobei sich die Farbe (14) in den Vertiefungen (13) ansammelt und den Farbbereich der Maserungen (10) wiedergibt.

10. Verfahren nach einem oder mehreren der vorhergehenden Ansprüche, wobei die Tiefe der Vertiefungen (13) im Wesentlichen proportional zu dem Farbbereich der Maserungen (10) ist.

## Revendications

1. - Procédé d'impression tridimensionnelle, pour la fabrication de fenêtres, qui comprend :
- au moins une étape de fourniture de PVC et d'au moins un solvant dans lequel ledit PVC est soluble ;
- au moins une étape de mélange dudit PVC et dudit solvant pour obtenir au moins un mélange en phase liquide ;
- au moins une étape de distribution dudit mélange sur au moins une surface de dépôt (1) ;
- au moins une étape d'évaporation dudit solvant pour obtenir au moins une couche de PVC (2) d'au moins un article manufacturé (3), ladite étape d'évaporation étant postérieure à ladite étape de distribution ; et
- répéter ladite étape de distribution et ladite étape d'évaporation pour obtenir une pluralité desdites couches de PVC (2) se chevauchant, formant ledit article manufacturé (3) ;
dans lequel ledit article manufacturé (3) est une partie de surface décorative d'un élément profilé (4a) pour des cadres de fenêtre.

2. - Procédé selon la revendication 1, dans lequel ledit solvant est au moins l'un parmi une cétone et un éther.

3. - Procédé selon une ou plusieurs des revendications précédentes, dans lequel ledit solvant est au moins l'un parmi une cétone cyclique et un éther cyclique.

4. - Procédé selon une ou plusieurs des revendications précédentes, dans lequel ledit solvant est au moins l'un parmi la cyclohexanone et le tétrahydrofurane.

5. - Procédé selon une ou plusieurs des revendications précédentes, dans lequel ledit mélange comprend ledit solvant dans un pourcentage en poids par rapport audit PVC de telle sorte que la viscosité dudit mélange est égale à une valeur fixe.

6. - Procédé selon une ou plusieurs des revendications précédentes, comprenant au moins une étape de fourniture d'au moins un ensemble de distribution (5) comprenant :
- au moins une tête de distribution dudit mélange sur ladite surface de dépôt (1) ; et
- au moins un système de retrait et de récupération (7, 8) dudit solvant évaporé.

7. - Procédé selon une ou plusieurs des revendications précédentes, dans lequel ledit ensemble de distribution (5) comprend au moins une unité de mélange (6) dudit PVC et dudit solvant.

8. - Procédé selon une ou plusieurs des revendications précédentes, qui comprend au moins une étape de définition de la forme superficielle dudit article manufacturé (3) comprenant :
- au moins une étape de fourniture d'au moins une image (9) en format numérique reproduisant au moins une partie de surface en bois comportant une pluralité de grains (10), comprenant une pluralité de pixels ;
- au moins une étape d'identification d'au moins une donnée de gamme de couleurs de chacun desdits pixels au moyen d'au moins un logiciel ; et
- au moins une étape de transformation de ladite donnée de gamme de couleurs en au moins une donnée spatiale de profondeur pour produire au moins un modèle numérique tridimensionnel dudit article manufacturé (3) avec un effet de matière comportant au moins une surface extérieure (11) reproduisant lesdits grains (10) au moyen d'une pluralité de rainures (13) ayant une profondeur variable ;
ladite étape de distribution se déroulant de façon à produire une impression tridimensionnelle dudit modèle pour obtenir ledit article manufacturé (3) avec un effet de matière au moyen dudit ensemble de distribution (5).

9. - Procédé selon une ou plusieurs des revendications précédentes, qui comprend au moins une étape de peinture de ladite surface extérieure (11) au moyen d'au moins une peinture (14), ladite peinture (14) s'accumulant dans lesdites rainures (13) et reproduisant ladite gamme de couleurs desdits grains (10).

10. - Procédé selon une ou plusieurs des revendications précédentes, dans lequel la profondeur desdites rainures (13) est sensiblement proportionnelle à ladite gamme de couleurs desdits grains (10).
